(19) Europäisches Patentamt / European Patent Office / Office européen des brevets

(11) **EP 4 438 350 B1**

(12) **EUROPEAN PATENT SPECIFICATION**

(45) Date of publication and mention
of the grant of the patent:
**06.05.2026   Bulletin 2026/19**

(21) Application number: **24165088.6**

(22) Date of filing: **21.03.2024**

(51) International Patent Classification (IPC):
**B60G 11/26** (2006.01)      **B60G 21/067** (2006.01)
**F16F 9/06** (2006.01)       **B60G 3/12** (2006.01)

(52) Cooperative Patent Classification (CPC):
**B60G 11/265; B60G 3/12; B60G 21/067;**
**F16F 9/063; F16F 9/067;** B60G 2200/132;
B60G 2202/154; B60G 2204/81; B60G 2204/8304;
B60G 2300/37

(54) **HYDROPNEUMATIC SYSTEM PROVIDED WITH HYDROPNEUMATIC CYLINDERS FOR SUSPENSIONS OF VEHICLE WHEEL ASSEMBLIES, AND ACCORDING VEHICLE**

HYDROPNEUMATISCHES SYSTEM MIT HYDROPNEUMATISCHEN ZYLINDERN FÜR AUFHÄNGUNGEN VON FAHRZEUGRADANORDNUNGEN UND ENTSPRECHENDES FAHRZEUG

SYSTÈME HYDROPNEUMATIQUE ÉQUIPÉ DE CYLINDRES HYDROPNEUMATIQUES POUR SUSPENSIONS D'ENSEMBLES ROUES DE VÉHICULE ET VÉHICULE ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **27.03.2023   IT 202300005817**

(43) Date of publication of application:
**02.10.2024   Bulletin 2024/40**

(73) Proprietor: **COMETTO S.p.A.**
**12011 Borgo San Dalmazzo (IT)**

(72) Inventors:
• **LIPPI, Fabrizio**
**12011 BORGO SAN DALMAZZO (CN) (IT)**
• **FICKERS, Alexander**
**12011 BORGO SAN DALMAZZO (CN) (IT)**

• **GIORDANO, Gabriele**
**12011 BORGO SAN DALMAZZO (CN) (IT)**
• **FRONI, Francesco**
**12011 BORGO SAN DALMAZZO (CN) (IT)**
• **GHIGLIONE, Stefano**
**12011 BORGO SAN DALMAZZO (CN) (IT)**
• **MARTINI, Alessandro**
**12011 BORGO SAN DALMAZZO (CN) (IT)**

(74) Representative: **Studio Torta S.p.A.**
**Via Viotti, 9**
**10121 Torino (IT)**

(56) References cited:
EP-A1- 3 753 763       EP-A1- 4 070 974
CN-A- 108 775 368      CN-A- 113 858 904
DE-A1- 102011 115 402   DE-U1- 9 005 472
US-B1- 7 562 887        US-B1- 8 886 402

**Description**

TECHNICAL FIELD

The present invention relates to a hydropneumatic system provided with hydropneumatic cylinders for suspensions of vehicle wheel assemblies, in particular for a trailer, according to the preamble of claim 1, corresponding to document EP3753763. A furtner hydropneumatic suspension system is disclosed in document DE 10 2011 115402 A1.

PRIOR ART

In the field of transport by means of tired vehicles, it is known to employ trailers towed by a tractor and comprising a chassis, defining a loading floor, and a plurality of wheel assemblies, each of which is connected to the chassis via a relative suspension comprising a hydraulic cylinder.

When the loads to be transported have a relatively high mass, the use of trailers with a high number of axles results to be necessary, so as to increase the payload capacity thereof. The main problem of a multi-axle system is the need to be able to distribute the load in a more or less homogeneous manner on each one of the wheel assemblies.

This type of problem is normally solved by solutions in which the cylinders of the suspensions are normally divided into groups, or zones, and the cylinders of each group or zone are supplied via a dedicated hydraulic circuit. In other words, the cylinders belonging to each group, or zone, are put into communication with each other, so as to assure the same hydraulic pressure and consequently assure the same load transferred to the ground.

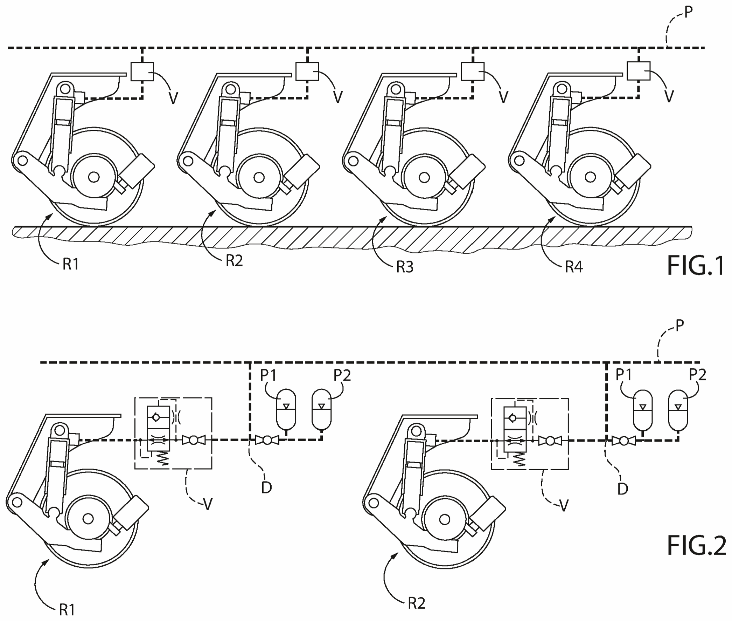

Figure 1 schematically illustrates a layout according to this type of known solutions: specifically, a supply line P supplies pressurized oil to a series of hydraulic cylinders, belonging to the suspensions of respective wheel assemblies, numbered from R1 to R4.

In the case where the first wheel encounters a difference in height (be it positive or negative), inside its hydraulic cylinder a local increase (decrease) in pressure takes place, such to make oil flow towards (from) the line P and consequently transfer such pressure to the suspensions of the other wheels. In this manner, the load on the wheels is automatically redistributed: in other words, the load tends to remain constant between the various wheel assemblies and, unless there are dynamic effects, tends to adjust to the unevenness of the ground.

Normally, a so-called "parachute" valve V is interposed between the cylinder of each wheel assembly and the line P, capable of blocking the flow in both directions in the case where there is a breakage in the flexible pipe that puts the cylinder in communication with the line P. The intervention of this valve thus prevents the lowering of all the suspensions, and the consequent variation of the attitude of the load, and averts possible consequences deriving from this breakage (i.e. averts damage to the wheel assemblies owing to the overloads, due to the loss of redistribution of the load, and/or the overturning of the trailer due to the sudden lowering of a side of the vehicle).

This type of valves is capable of activating, so as to inhibit the passage of oil, when the flow coming out of the cylinder of the suspension reaches a predetermined flow rate threshold, which has to be dimensioned on the basis of the size of the cylinder.

This solution, the response of which simply derives from the flow rate of the hydraulic flow, is not capable of distinguishing whether the high value of the oil flow rate passing through the parachute valve V is due to an actual loss of oil (upstream or downstream of such valve V), or to a sudden lifting or lowering of the wheel assembly, deriving from the combination between difference in height of the ground and speed of the vehicle.

In other words, the more the vehicle speed is increased, the greater the possibility that the parachute valves V will activate, invalidating the redistribution function of the load between the various wheel assemblies (R1-R4). In this situation, in fact, the suspension of the wheel assembly facing the difference in height of the ground becomes stiff, owing to the closing of the corresponding parachute valve V, and consequently the dynamic behaviour of such wheel assembly will then essentially depend on the characteristics (damping, stiffness, etc...) of the tyre in contact with the ground.

It follows that the dynamic overloads to which the wheel assembly, as well as the chassis of the trailer, will be subject, will depend on such characteristics, with a response that may be more or less damped.

For example, with a tyre inflated with air, the response will be less reactive and more damped; whereas, with a tyre made of solid rubber, the response will be more reactive and less damped. Furthermore, with regard to the tyres inflated with air, also the inflation pressure (typically of 10 bar) affects the dynamic response of the wheel assembly: upon the increasing of the load, it is suitable to increase the inflation pressure of the tyres, but as collateral effect a more prompt and less damped response will be achieved.

This dynamic behaviour of the known solutions, as described above, does not match market requirements, i.e. needs that lead to ever-more increase loads and travel speeds.

In the prior art, in order to overcome this drawback, solutions are known relative to two different systems, the one with parachute valves having an activation delay, and the other one with nitrogen accumulators, installed along the line P, as close as possible to the hydraulic cylinders of the wheel assemblies.

The scheme of Figure 2 shows this second solution, commonly employed in the exceptional transport vehicles: between each parachute valve V and the line P, a «T» branch is arranged (indicated by reference D), for relieving the pressure wave of the oil, consequent to the impact of the wheel with an obstacle (a bump, a step, etc...), towards an accumulator assembly.

In particular, it is common practice to install two accumulators P1 and P2, preloaded at two different calibration levels, corresponding to respective load levels of the vehicle.

When the wheel encounters an obstacle, the pressure in the line P tends to suddenly increase, up to reaching the first calibration value, when the oil starts flowing towards the accumulator P1 so as to dampen the increase in pressure in the line P. Such pressure can increase up to the second calibration level, where the oil will start flowing also towards the accumulator P2 so as to continue dampening the increase in pressure in the line P.

For example, the accumulator P1 can be calibrated at 50 bar and the accumulator P2 can be calibrated at 150 bar.

The system operates well around these two pressure values, but practically has scarce absorption effect of the impacts if the pressure rises to values far from the calibration levels.

Furthermore, since the load of the vehicle can vary from a null value to a maximum value, it results to be particularly difficult to choose the two calibration values. The system would improve if a larger number of accumulators were installed, at different calibration values, progressively increasing, so as to try to better cover the payload that can be transported on the trailer: however, a solution of this type would lead to increase the cost and the complexity of the system in an undesired manner.

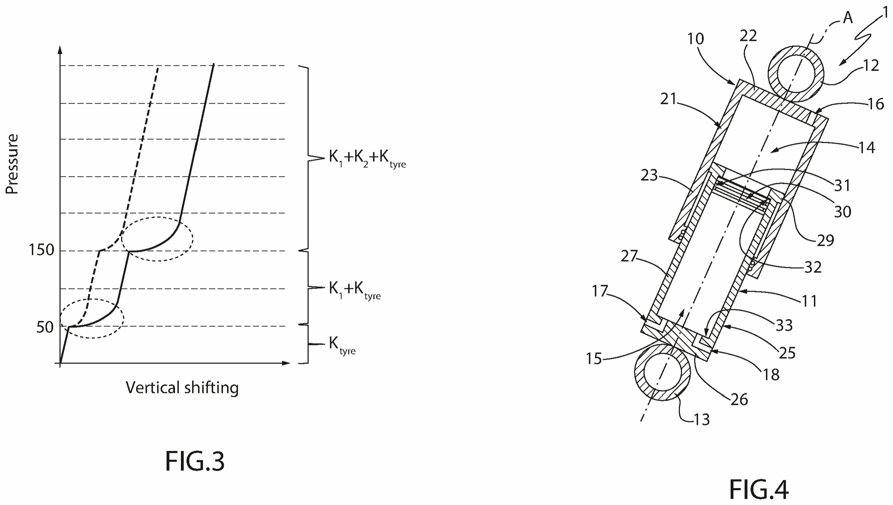

In order to show these drawbacks, the diagram of Figure 3 represents, on the ordinate axis, the dynamic response of the pressure in the cylinder of the suspension when the corresponding wheel assembly encounters a road obstacle. The impact entails a variation of the vertical position of the wheel, represented on the abscissa axis.

As long as the pressure inside the cylinder of the suspension does not exceed the calibration value of the accumulator P1 (for example 50 bar), the response (i.e. the pressure in the line P) depends on the inflation pressure and on the type of tyre, i.e. on the elastic constant or stiffness of the tyre (Ktyre).

Once the calibration level of the accumulator P1 has been reached (for example 50 bar), the overall elastic constant or stiffness depends on the set of the two terms (Ktyre and stiffness K1 of the accumulator P1).

The pressure-stroke trend of the accumulator varies according to an adiabatic transformation law, owing to the velocity of the event. Depending on the volume of oil that has entered the accumulator P1, the latter will react with an increasing stiffness, progressively losing its effectiveness with regard to the absorption of the pressure. The phenomenon repeats in a similar manner when the calibration value of the accumulator P2 is reached (for example 150 bar): the overall stiffness will depend on the set of three terms, i.e. Ktyre, K1 and the stiffness K2 of the accumulator P2.

Therefore, by analysing the graph, it is possible to see that only around the two calibration values there is an actual reduction in the stiffness of the system and, therefore, an actual absorption of the pressure consequent the impact against the obstacle.

The system of Figure 2 has a further limitation: if the speed of the vehicle is high, there will be a high vertical velocity in the shifting of the wheel during the impact with the obstacle, but there is also a maximum threshold for the oil flow rate, due to the passage cross-sections in the pipes, in the connections and in the supply port of the cylinder. When the velocity of the event is so high to require oil flow rates greater than this maximum threshold, the amount of excess oil is not sent to the accumulators P1,P2, but remains inside the cylinder of the suspension. The consequent dynamic overload will be directly transferred to the chassis via the cylinder: the dashed curve in Figure 3 represents, by way of example, this operating condition, more restrictive than the one shown with solid line, described above.

The object of the present invention is thus to solve the drawbacks described above, preferably in a simple and/or effective and/or cost-effective manner.

In other words, the need is felt to overcome the current limitations deriving from accumulators set to predefined calibration values, with consequent limited operative range, and possibly transfer high volumes of oil, in order to be able to dampen impacts at high speeds.

In this background, in particular, it is suitable to provide a solution which automatically adapts to the load of the vehicle, and which is integrated inside the cylinder of the suspension of the wheel assembly.

## SUMMARY OF THE INVENTION

The aforementioned object is achieved by a hydropneumatic system for suspensions of vehicle wheel assemblies, as defined in claim 1, and by a vehicle according to claim 12.

The dependent claims define particular embodiments of the invention.

## BRIEF DESCRIPTION OF THE DRAWINGS

In the following, in order to better understand the present invention, preferred embodiments will be described by way of non-limiting example, with reference to the accompanying drawings, wherein:

- Figures 1 and 2 are schemes relative to solutions of the prior art, described above;
- Figure 3 is a diagram which shows the trend of the pressure in the solution of Figure 2;
- Figure 4 illustrates, in cross-section and in a schematic manner, a hydropneumatic cylinder for a suspension of a vehicle wheel assembly, according to a preferred embodiment of the hydropneumatic system of the present invention;
- Figure 5 shows the hydropneumatic system according to the teachings of the present invention; and
- Figures from 6 to 8 are similar to Figure 5 and show different operating conditions of the vehicle.

DETAILED DESCRIPTION OF PREFERRED EMBODIMENTS OF THE INVENTION

In Figure 4, reference numeral 1 indicates a hydropneumatic cylinder (schematically illustrated) for a suspension of a wheel assembly.

The cylinder 1 extends along a rectilinear axis A and comprises two bodies 10 and 11 which can move axially relative to each other and having respective attachment portions 12 and 13, arranged at the opposite axial ends of the cylinder 1 and having shape, structure and dimensions such as to be connectable, in a known manner, to respective support portions (not illustrated) in the wheel assembly.

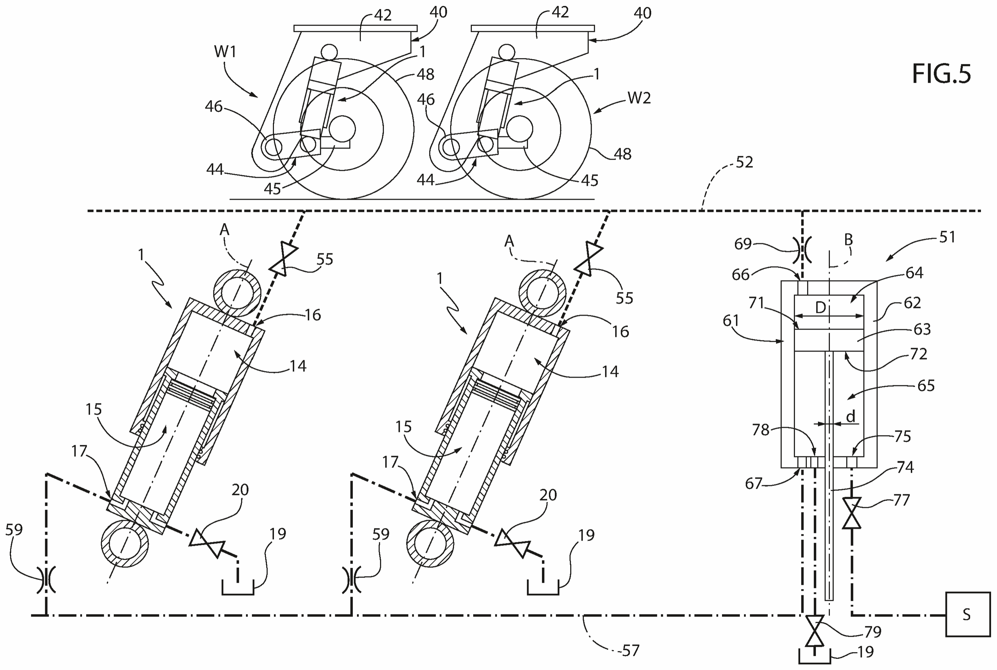

The cylinder 1 has, on the inside, two chambers 14 and 15, sealed in a fluid-tight manner relative to each other and suitable to receive pressurized oil and pressurized air via respective ports 16 and 17, carried by the bodies 10 and 11, respectively. In particular, the body 11 also has a port 18, separate from the port 17, for discharging possible oil which leaks during use from the chamber 14 to the chamber 15. In particular, as shown in Figure 5, the oil is discharged from the chamber 15 and collected in a tank 19 after opening a valve 20 arranged downstream of the port 18.

With reference to the specific example of Figure 4, the body 10 comprises a jacket 21, which is fixed relative to the attachment portion 12 and comprises, in turn, a bottom portion 22 and a tubular portion 23. In particular, the bottom portion 22 axially delimits a side of the chamber 14, supports the attachment portion 12 and is perforated so as to define the port 16; the tubular portion 23 radially delimits at least a part of the chamber 14 and protrudes from a peripheral edge of the bottom portion 22.

The body 11 comprises a stem 25, which is fixed relative to the attachment portion 13. In particular, the stem 25 comprises a bottom portion 26 and a tubular portion 27. The bottom portion 26 axially delimits a side of the chamber 15, supports the attachment portion 13 and is perforated so as to define the ports 17 and 18. The tubular portion 27 radially delimits the chamber 15 and protrudes from a peripheral edge of the bottom portion 26.

The stem 25 engages the tubular portion 23, in a fluid-tight manner, and is axially slidable between two stroke end shoulders defined by the body 11. In particular, at the opposite axial end relative to the attachment portion 13, the tubular portion 27 has a flange 29, which radially protrudes outwards and has two opposite faces, suitable to axially abut against such shoulders.

In the illustrated solution, the flange 29 is slidable along the inner surface of the tubular portion 23 without gaskets (i.e. with a "plunging" cylinder configuration). According to not illustrated variations, the flange 29 is coupled via gaskets to such inner surface, and the tubular portions 23 and 27 radially form between each other an annular gap, which can be put in communication with the ambient pressure (for a single-acting cylinder configuration), via a filter, or be put in communication with a further hydraulic line (for a double-acting cylinder configuration), for example a discharge line connected to a tank.

According to an aspect of the present invention, a piston element 30 axially separates the chambers 14 and 15 from each other, in a fluid-tight manner. In the illustrated example, the stem 25 is internally hollow and houses the piston element 30, and the latter is preferably disk-shaped. The piston element 30 is coupled via gaskets to a surface 31 of the body 11, which guides the axial translation of the piston element 30.

In the illustrated example, the surface 31 is the inner cylindrical surface of the tubular portion 27. According to a not illustrated variation, the piston element could be defined by an axially hollow element, fitted in an axially slidable manner on a side surface of the body 11.

The piston element 30 is free to axially slide or float relative to the body 11 in response to the pressures in the two chambers 14 and 15, between a first and a second stroke end position, defined by shoulders 32,33 of the body 11, axially facing the piston element 30. The piston element 30 reaches the first stroke end position when the air pressure in the chamber 15 exceeds the oil pressure in the chamber 14, thus the volume of the chamber 15 becomes maximum, and simultaneously the port 16 is put in communication with a discharge pipe for making the oil flow out. Whereas, the piston element 30 reaches the second stroke end position when the oil pressure in the chamber 14 exceeds the air pressure in the chamber 15, thus the volume of the chamber 15 becomes minimum, and simultaneously the port 17 is put in communication with a discharge pipe for releasing the air.

For example, the shoulder 33 is defined by the bottom portion 26, and the shoulder 32 is defined by a flange, which radially protrudes inwards, at the axial end of the tubular portion 27.

In practice, the inner cavity of the stem 25 is divided by the piston element 30 into two zones, the one belonging to the chamber 14, and the other one defining the chamber 15.

It is thus evident that the volume of the chambers 14 and 15 is variable on the basis of the relative axial position of the bodies 10 and 11, and on the basis of the axial position of the piston element 30 along the surface 31 of the body 11.

Figure 5 schematically shows a plurality of wheel assemblies W1, W2, etc..., each having a respective cylinder 1. Specifically, the cylinder 1 forms part of a suspension 40 of the wishbone type, which comprises a support structure 42, suitable to be fixed to a vehicle chassis (not illustrated), and at least one oscillating arm 44, having two opposite ends, 45 and 46: the end 45 supports, in a known manner and not illustrated, at least one wheel 48; whereas, the end 46 is coupled to the structure 42, in a known manner, for oscillating, together with the wheel 48, about a pivot axis parallel to the rotation axis of the wheel. The latter can be of motorized or idle type.

The cylinder 1 is arranged between the wheel 48 and the structure 42 so as to determine the angle of the arm 44 about the pivot axis and thus the height from the ground of the vehicle and for absorbing a possible unevenness present along the forward movement direction.

The cylinders 1 form part of a hydropneumatic system 51 for lifting the respective structures 42 from the ground and perform a function of suspension and absorption of the impacts during the travel.

The system 51 comprises a hydraulic supply line 52, which is suitable to receive pressurized oil from a pump (not illustrated) during the step of initial lifting of the vehicle, and communicates with the chambers 14 of the cylinders 1, via the respective ports 16 and via respective "parachute" valves 55, normally open. The valves 55, of known type and not specifically described, can be integrated in, or separated from, the corresponding ports 16. During normal travel conditions, the pressure inside the line 52 and the chambers 14 will essentially depend on the mass of the transported load, unless there are dynamic effects.

The system 51 further comprises a pneumatic supply line 57, which is in communication with the chambers 15 of the cylinders 1, via the respective ports 17 and via respective throttlings or restrictions 59. The latter can be elements integrated in, or separated from, the corresponding ports 17.

Furthermore, the system 51 comprises at least one pressurizing cylinder 61, extending along a rectilinear axis B and having a jacket 62 and a piston element 63, which is housed in the jacket 62 so as to axially separate, in a fluid-tight manner, two chambers 64 and 65. The piston element 63 is guided by a cylindrical inner surface of the jacket 62 so as to be able to axially float.

The chamber 64 has a port 66 which is connected to the line 52 via a throttling or restriction 69, which insulates the chamber 64 in dynamic conditions, so as to cut pressure peaks possibly present in the line 52 (deriving from the road unevenness) and keep the pressure in the cylinder 61 as constant as possible.

The chamber 65 has a port 67 directly connected to the line 57, for pressurizing the latter in response to the pressure in the chamber 64. In fact, the pressure in the chamber 65 is determined by the oil pressure in the chamber 64 and by the ratio between the areas of the opposite axial faces 71 and 72 of the piston element 63. According to a preferred aspect of the present invention, the area of the face 71, thrusted by the oil in the chamber 64, is larger than the area of the face 72, which axially defines the chamber 65. For example, the area of the face 72 is reduced by the presence of a stem 74 which protrudes from the piston element 63 and passes through the wall of the jacket 62.

Therefore, the cylinder 61 is configured to set, in static or almost static conditions, the pressure value of the air in the chambers 15 of the cylinders 1, as a function of the pressure in the chamber 64.

The chamber 65 is suitable to be put in communication with a compressed air source S, defined by a pneumatic system (not illustrated) on board the vehicle. For example, the chamber 65 has a port 75 which is separate from the port 67 and is connected to the compressed air source via a valve 77 which can be open/closed. Simultaneously, in dynamic conditions, the restrictions 59 insulate the chambers 15 of the cylinders 1 from the line 57 and thus from the chamber 65.

Preferably, the chamber 65 has a port 78, separate from the ports 67 and 75, for discharging possible oil that leaks during use from the chamber 64 to the chamber 65. In particular, the port 78 communicates with the tank 19 via a valve 79 which can be open for discharging the oil.

In use, the operation of the embodiment described above for the cylinder 1 and for the system 51 is as follows.

Before lifting the chassis of the vehicle, in loadless state, it is necessary to perform some preliminary operations, which consist in connecting the line 52 to a discharge port (in a known and not illustrated manner), and opening the valve 77 so as to pressurize the pneumatic circuit defined by the combination of the chamber 65, the line 57 and all the chambers 15, to a predefined pressure value, via the source S.

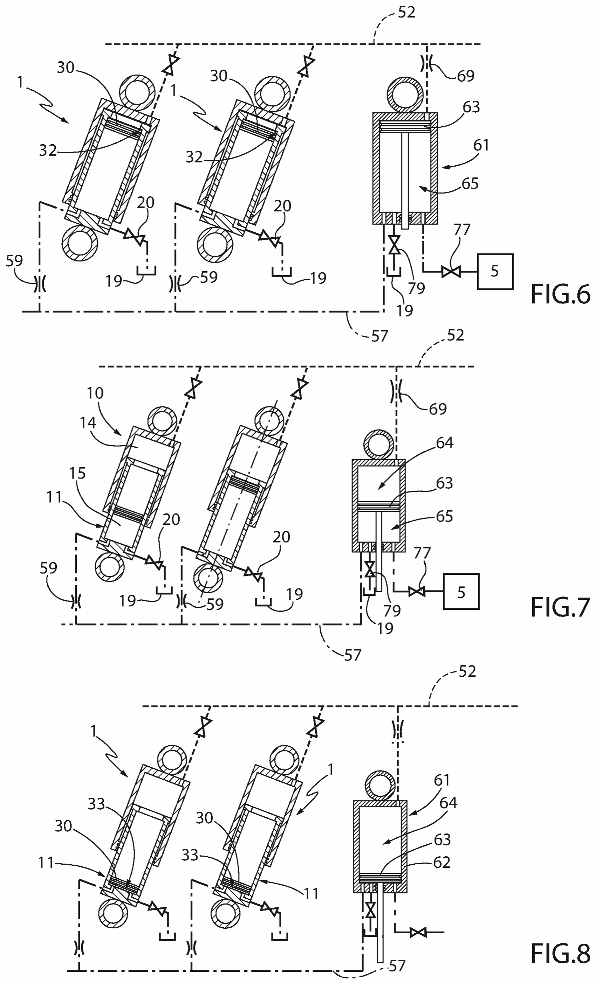

During this step of pneumatic pressurization, since the oil is in communication with a discharge pipe (not illustrated), the cylinders 1 are completely "closed" (i.e. the body 11 is completely retracted in the body 10), as is schematically shown in Figure 6.

Furthermore, by effect of the air pressure, the piston element 30 reaches the first stroke end position against the shoulder 32, and similarly also the piston element 63 reaches a stroke end position, with maximum volume of the chamber 65.

Once the target pressure value has been reached, the valve 77 is closed, so as to insulate the aforementioned pneumatic circuit.

Subsequently, the lifting of the chassis from the ground is achieved by supplying pressurized oil in the line 52 and, thus, in the chambers 14 of all the wheel assemblies associated with the system 51, as well as in the chamber 64 of the cylinder 61. In response to the oil pressure, the bodies 10 and 11 axially distance themselves from each other (Figure 5).

Simultaneously, the air pressure in the pneumatic circuit increases beyond the initial pressure value, thanks to the cylinder 61. Specifically, if the oil pressure is equal to a value p_oil, automatically in the line 57 a pressure p_air is established which is greater, i.e. equal to:

$$p\_air = p\_oil \cdot D^2 / ((D^2 - d^2))$$

where

> D = outer diameter of the piston element 63, and
> d = diameter of the stem 74.

This slight air overpressure in the line 57 is transferred to the chambers 15 and 14 of the cylinder 1 and keeps the piston element 30 in the first stroke end position during the lifting operations.

During travel of the vehicle (Figure 7), when the first wheel assembly associated with the system 51 encounters an obstacle, at a relatively high speed, such obstacle causes an upward thrust of the corresponding suspension 40. Such thrust, in turn, causes an axial compression on the cylinder 1 and, thus, an axial translation of the body 11 relative to the body 10, with consequent compression of the air in the chamber 15. Simultaneously, oil flows into the cavity of the stem 25, thus changing the axial position of the piston element 30 relative to the body 11.

In other words, the cylinder 1, which is subject to a sudden compression, behaves like an air spring. The restriction 59 associated with this cylinder 1 dynamically insulates the air in the chamber 15, which therefore does not condition the pressurization value of the line 57.

Therefore, in response to an obstacle on the road, the body 11 axially re-enters towards the body 10, so as to absorb the difference in height due to such obstacle. The oil pressure in the chamber 14 increases. If the event velocity is relatively high, this pressure increase tendentially remains confined in the chamber 14, i.e. transfers to the hydraulic line 52 only in a limited manner; in order to increase this insulation, a restriction or throttling (not illustrated) could possibly be added at, or in the proximity of, the port 16.

The possible increase in hydraulic pressure in the line 52, however, is also distributed on the other suspensions. Simultaneously, the restriction 69 insulates the cylinder 61 from this possible oil pressure increase in the line 52.

In this manner, the entity of a localized lifting of the vehicle is limited, when a wheel encounters an obstacle.

By suitably choosing the diameter D, it is possible to define the stiffness coefficient, or elastic response, of the air spring defined by the chamber 15.

Such air spring further adjusts to any transported load value, thanks to the cylinder 61. This is valid in the hypothesis of pressurizing the line 57 with completely closed cylinders before the lifting of the vehicle: in fact, the preliminary pneumatic pressurization, described above, virtually increases the operation range of the piston element 30.

In case of "negative" difference in height (for example, when a wheel encounters a road dip), the system does not intervene: in this case, the dynamic action is generally less violent, therefore load distribution on all the other suspensions results to be sufficient.

In case it is necessary to exclude the air springs defined by the chambers 15, and thus configure the cylinder 1 as if it were a purely hydraulic cylinder (Figure 8), it is sufficient to connect the line 57 to a discharge port, for example by opening the valve 77 and controlling a selector valve, not illustrated, so as to put in communication with the external environment, instead of with the source S.

In this condition, the piston elements 30 all translate in their second stroke end positions against the shoulders 33; similarly, the piston element 63 axially translates in a stroke end position reducing to the minimum the volume of the chamber 65.

In practice, in each cylinder 1, the piston element 30 forms one single element with the body 11, being rested on the bottom of the inner cavity of the body 11. The cylinder 1 will thus have a substantially stiff response, equivalent to the response of a conventional hydraulic cylinder devoid of air spring.

Based on the foregoing, the advantages of the cylinder 1 and of the system 51 according to the invention are evident for a person skilled in the art.

First, the proposed solution allows exploiting the cylinders 1 of the suspensions 40 for forming respective air springs which absorb the road unevenness without the need to add hydraulic accumulators along the hydraulic supply line 52 for each wheel assembly (W1, W2, etc...). Therefore, thanks to the cylinders 1, the system 51 results to be extremely compact and has a relatively low number of components.

Secondly, the air springs defined by the cylinders 1 are not subject to a calibration, but intervene for performing a damping function for any compression value. In other words, the intervention of the air springs does not depend on the entity of the difference in height of the road, or on the load arranged on the vehicle, or on the oil pressure in the line 52.

In particular, the proposed solution allows obtaining a variable height suspension which is provided with air spring and which automatically adapts its stiffness relative to the transported load.

Furthermore, the intervention of the air springs occurs directly in response to the axial compression due to the differences in height of the road. In other words, in order to absorb the impacts due to the differences in height of the road, there is only a shifting of the body 11 relative to the piston element 30 and to the body 10, with a consequent compression of the air in the chamber 15, without any flow of oil towards the line 52. Therefore, the passage cross-sections for the oil in pipes, connections, etc... of the system 51 do not affect the response times and the effectiveness of the damping.

For the same reasons, in the proposed solution the response times and the effectiveness of the damping are not affected by more or less high speeds of the vehicle. In fact, the air in the chambers 15 is immediately compressed when the respective wheels encounter a difference in height, whatever the velocity of axial shifting of the body 11 relative to the piston element 30.

Regardless of the presence of the air springs integrated in the cylinders 1, the pressure of the line 52 automatically adapts to the road unevenness so as to equalize such pressure and, thus, distribute in a uniform manner the pressure increase on all the suspensions of the system 51, as in the known solutions.

Furthermore, as described above with reference to Figure 8, the cylinders 1 can be configured as if they were purely hydraulic traditional cylinders, by connecting the line 57 to a discharge port.

Finally, it is clear that modifications and variations can be made to the cylinder 1 and to the system 51 according to the present invention which do not anyway depart from the protection scope defined by the appended claims.

In particular, the structure of the components of the cylinder 1 could be different from the one illustrated, and/or the compressed air source S could be connected to the line 57 instead of being connected to a port of the chamber 65.

Furthermore, the cylinder 1 and the system 51 could be employed for suspensions different from the wishbone suspension, described above with reference to Figure 5, for example they could be employed for a suspension of push-rod (i.e. "double triangle") type.

## Claims

1. Hydropneumatic system (51) for suspensions of vehicle wheel assemblies, the system comprising:

   - at least two hydropneumatic cylinders (1), each of which is configured to be associated with a respective vehicle wheel assembly, each of the at least two hydropneumatic cylinders extends along a first axis (A), and comprises:

     a) a first and a second body (10,11), which can move axially relative to each other and suitable to be coupled to respective attachment points in the respective vehicle wheel assembly;
     b) a first piston element (30), coupled in a fluid-tight manner to said second body (11) and floating along said first axis (A) relative to said second body (11);
     c) a first and a second chamber (14,15), defined respectively by said first and second body (10,11) and axially separated from each other by said first piston element (30);

   - a hydraulic supply line (52) communicating with the first chambers (14) of said hydropneumatic cylinders (1) and suitable to receive pressurized oil;

   **characterized by** further comprising:

     - a pneumatic supply line (57) communicating with the second chambers (15) of said hydropneumatic cylinders (1) and suitable to receive pressurized air; and
     - a pressurization device configured to set the pressure in said pneumatic supply line (57) to a value at least equal to the pressure in said hydraulic supply line (52);

   and wherein said pressurization device comprises a pressurizing cylinder (61), extending along a second axis (B) and having a third and a fourth chamber (64,65) axially separated from each other by a second piston element (63), floating along said second axis (B); said third chamber (64) communicating with said hydraulic supply line (52), and said fourth chamber (65) communicating with said pneumatic supply line (57); said second piston element (63) having a first and a second face (71,72), which axially delimit said third chamber (64) and, respectively, said fourth chamber (65); said first face (71) having an area larger than an area of said second face (72).

2. The system according to claim 1, wherein in each said hydropneumatic cylinder (1) said second body (11) comprises two shoulders (32,33) axially facing respective faces of said first piston element (30) so as to define respective axial stroke end positions for said first piston element (30).

3. The system according to claim 1 or 2, wherein said first body (10) comprises a tubular portion (23) that radially defines said first chamber (14).

4. The system according to claim 3, wherein said second body (11) comprises a stem (25) that engages said tubular portion (23) and is coupled in a fluid tight manner to an inner surface of said tubular portion (23).

5. The system according to claim 4, wherein said stem (25) is axially hollow and radially defines said second chamber (15); said first piston element (30) being coupled in a fluid tight manner to an inner cylindrical surface (31) of said stem (25).

6. The system according to any one of the preceding claims, wherein said second chamber (15) has two ports (17,18) separate from each other, for connection to said pneumatic supply line and for discharging possible oil from said second chamber (15).

7. The system according to anyone of the previous claims, wherein said hydraulic supply line (52) communicates with said third chamber (64) via a first throttling (69).

8. The system according to anyone of the previous claims, wherein a valve (77) is interposed between said fourth chamber (65) and a pressurized air source (S); said valve (77) being normally closed and being openable to pressurize said fourth chamber (65) and said pneumatic supply line (57) to a predefined pressure value.

9. The system according to any one of the preceding claims, wherein said pneumatic supply line (57) communicates with the second chambers (15) of said hydropneumatic cylinders (1) via a respective second throttling (59).

10. The system according to any one of the preceding claims, wherein the second chambers (15) of said hydropneumatic cylinders (1) are connected to a tank (19) via respective further valves (20), which can be opened to discharge oil from said second chambers (15).

11. The system according to any one of the preceding claims, wherein said hydraulic supply line (52) communicates with the first chambers (14) of said hydropneumatic cylinders (1) via respective parachute valves (55).

12. Vehicle comprising:

   - a hydropneumatic system (51), according to any one of the preceding claims, and
   - a plurality of wheel assemblies comprising respective suspensions (40), each having at least one of said hydropneumatic cylinders (1).

13. The vehicle according to claim 12, wherein each said wheel assembly comprises at least one wheel (48), which can rotate about a rotation axis (50), and wherein each said suspension (40) comprises a support structure (42) fixed to a vehicle chassis and at least one oscillating arm (44), having a first end that supports said wheel (48), and a second end coupled to said support structure (42) so as to rotate, together with said wheel (48), about a pivot axis (49); the at least one of said hydropneumatic cylinders (1) being arranged between said wheel (48) and said support structure (42).

**Patentansprüche**

1. Hydropneumatisches System (51) für die Aufhängung von Fahrzeugradanordnungen, wobei das System umfasst:

   - mindestens zwei hydropneumatische Zylinder (1), von denen jeder so konfiguriert ist, dass er einer jeweiligen Fahrzeugradanordnung assoziiert ist, wobei sich jeder der mindestens zwei hydropneumatischen Zylinder entlang einer ersten Achse (A) erstreckt und umfasst:

   a) einen ersten und einen zweiten Körper (10, 11), die sich axial relativ zueinander bewegen können und dazu geeignet sind, mit entsprechenden Befestigungspunkten in der jeweiligen FahrzeugradAnordnung verbunden zu werden;
   b) ein erstes Kolbenelement (30), das fluidisch dicht mit dem zweiten Körper (11) verbunden ist und entlang der ersten Achse (A) relativ zum zweiten Körper (11) schwimmt;
   c) eine erste und eine zweite Kammer (14, 15), die jeweils durch den ersten und den zweiten Körper (10, 11) begrenzt und durch das erste Kolbenelement (30) axial voneinander getrennt sind;

   - eine Hydraulikversorgungsleitung (52), die mit den ersten Kammern (14) der hydropneumatischen Zylinder (1) in Verbindung steht und zur Aufnahme von unter Druck stehendem Öl geeignet ist;
   **dadurch gekennzeichnet, dass** es weiter Folgendes umfasst:

   - eine pneumatische Versorgungsleitung (57), die mit den zweiten Kammern (15) der hydropneumatischen Zylinder (1) in Verbindung steht und zur Aufnahme von unter Druck stehender Luft geeignet ist; und
   - eine Druckbeaufschlagungsvorrichtung, die so konfiguriert ist, dass sie den Druck in der pneumatischen Versorgungsleitung (57) auf einen Wert einstellt, der mindestens dem Druck in der hydraulischen Versorgungsleitung (52) entspricht;

   und wobei die Druckbeaufschlagungsvorrichtung einen Druckzylinder (61) umfasst, der sich entlang einer zweiten Achse (B) erstreckt und eine dritte und eine vierte Kammer (64, 65) aufweist, die axial voneinander durch ein zweites Kolbenelement (63) getrennt sind, das entlang der zweiten Achse (B) schwimmt; wobei die dritte Kammer (64) mit der Hydraulikversorgungsleitung (52) in Verbindung steht und die vierte Kammer (65) mit der pneumatischen Versorgungsleitung (57) in Verbindung steht; wobei das zweite Kolbenelement (63) eine erste und eine zweite Fläche (71, 72) aufweist, die die dritte Kammer (64) bzw. die vierte Kammer (65) axial begrenzen; wobei die erste Fläche (71) eine Fläche aufweist, die größer ist als die Fläche der zweiten Fläche (72).

2. System nach Anspruch 1, wobei in jedem hydropneumatischen Zylinder (1) der zweite Körper (11) zwei Schultern (32, 33) umfasst, die axial den jeweiligen Flächen des ersten Kolbenelements (30) zugewandt sind, um jeweilige axiale Hubendpositionen für das erste Kolbenelement (30) zu definieren.

3. System nach Anspruch 1 oder 2, wobei der erste Körper (10) einen rohrförmigen Abschnitt (23) umfasst, der die erste Kammer (14) radial definiert.

4. System nach Anspruch 3, wobei der zweite Körper (11) einen Schaft (25) umfasst, der in den rohrförmigen Abschnitt (23) eingreift und fluidisch dicht mit einer Innenfläche des rohrförmigen Abschnitts (23) verbunden ist.

5. System nach Anspruch 4, wobei der Schaft (25) axial hohl ist und radial die zweite Kammer (15) definiert; wobei das erste Kolbenelement (30) in einer flüssigkeitsdichten Weise mit einer inneren zylindrischen Oberfläche (31) des Schafts (25) verbunden ist.

6. System nach einem der vorstehenden Ansprüche, wobei die zweite Kammer (15) zwei voneinander getrennte Anschlüsse (17, 18) aufweist, die zur Verbindung mit der pneumatischen Versorgungsleitung und zum Abgeben von möglicherweise in der zweiten Kammer (15) vorhandenem Öl dienen.

7. System nach einem der vorstehenden Ansprüche, wobei die Hydraulikversorgungsleitung (52) über eine erste Drossel (69) mit der dritten Kammer (64) in Verbindung steht.

8. System nach einem der vorstehenden Ansprüche, wobei ein Ventil (77) zwischen der vierten Kammer (65) und einer Druckluftquelle (S) zwischengesetzt ist; wobei das Ventil (77) normalerweise verschlossen ist und geöffnet werden kann, um die vierte Kammer (65) und die pneumatische Versorgungsleitung (57) auf einen vordefinierten Druckwert zu bringen.

9. System nach einem der vorstehenden Ansprüche, wobei die pneumatische Versorgungsleitung (57) über eine jeweilige zweite Drossel (59) mit den zweiten Kammern (15) der hydropneumatischen Zylinder (1) in Verbindung steht.

10. System nach einem der vorstehenden Ansprüche, wobei die zweiten Kammern (15) der hydropneumatischen Zylinder (1) über jeweilige weitere Ventile (20) mit einem Tank (19) verbunden sind, die geöffnet werden können, um Öl aus den zweiten Kammern (15) abzugeben.

11. System nach einem der vorstehenden Ansprüche, wobei die Hydraulikversorgungsleitung (52) über jeweilige Fallschirmventile (55) mit den ersten Kammern (14) der hydropneumatischen Zylinder (1) in Verbindung steht.

12. Fahrzeug, umfassend:

   - ein hydropneumatisches System (51) nach einem der vorstehenden Ansprüche und
   - eine Vielzahl von Radanordnungen, die jeweilige Aufhängungen (40) umfassen, wobei jede mindestens einen der hydropneumatischen Zylinder (1) aufweist.

13. Fahrzeug nach Anspruch 12, wobei jede Radanordnung mindestens ein Rad (48) umfasst, das sich um eine Drehachse (50) drehen kann, und wobei jede Aufhängung (40) eine am Fahrzeugchassis befestigte Stützstruktur (42) und mindestens einen Schwingarm (44) aufweist, dessen erstes Ende das Rad (48) stützt und ein zweites Ende aufweist, das mit der Stützstruktur (42) verbunden ist, um sich zusammen mit dem Rad (48) um eine Schwenkachse (49) zu drehen; wobei der mindestens eine hydropneumatische Zylinder (1) zwischen dem Rad (48) und der Stützstruktur (42) angeordnet ist.

**Revendications**

1. Système hydropneumatique (51) pour suspensions d'ensembles roue de véhicule, le système comprenant :

   - au moins deux vérins hydropneumatiques (1), chacun desquels est configuré pour être associé à un ensemble roue de véhicule respectif, chacun des au moins deux vérins hydropneumatiques s'étend le long d'un premier axe (A), et comprend :

      a) un premier et un deuxième corps (10, 11), qui peuvent se déplacer axialement l'un par rapport à l'autre et appropriés pour être couplés à des points de fixation respectifs dans l'ensemble roue de véhicule respectif ;
      b) un premier élément piston (30), couplé d'une manière étanche aux fluides audit deuxième corps (11) et flottant le long dudit premier axe (A) par rapport audit deuxième corps (11) ;

c) une première et une deuxième chambre (14, 15), définies respectivement par ledit premier et ledit deuxième corps (10, 11) et axialement séparées l'une de l'autre par ledit premier élément piston (30) ;

- une conduite d'alimentation hydraulique (52) communiquant avec les premières chambres (14) desdits vérins hydropneumatiques (1) et appropriée pour recevoir de l'huile sous pression ;

**caractérisé par le fait qu'**il comprend en outre :

- une conduite d'alimentation pneumatique (57) communiquant avec les deuxièmes chambres (15) desdits vérins hydropneumatiques (1) et appropriée pour recevoir de l'air sous pression ; et
- un dispositif de pressurisation configuré pour régler la pression dans ladite conduite d'alimentation pneumatique (57) sur une valeur au moins égale à la pression dans ladite conduite d'alimentation hydraulique (52) ;

et dans lequel ledit dispositif de pressurisation comprend un vérin de pressurisation (61), s'étendant le long d'un deuxième axe (B) et ayant une troisième et une quatrième chambre (64, 65) axialement séparées l'une de l'autre par un deuxième élément piston (63), flottant le long dudit deuxième axe (B) ; ladite troisième chambre (64) communiquant avec ladite conduite d'alimentation hydraulique (52), et ladite quatrième chambre (65) communiquant avec ladite conduite d'alimentation pneumatique (57) ; ledit deuxième élément piston (63) ayant une première et une deuxième face (71, 72), qui délimitent axialement ladite troisième chambre (64) et, respectivement, ladite quatrième chambre (65) ; ladite première face (71) ayant une aire plus grande qu'une aire de ladite deuxième face (72)

**2.** Système selon la revendication 1, dans lequel, dans chaque dit vérin hydropneumatique (1), ledit deuxième corps (11) comprend deux épaulements (32, 33) faisant axialement face à des faces respectives dudit premier élément piston (30) de façon à définir des positions de fin de course axiale respectives pour ledit premier élément piston (30).

**3.** Système selon la revendication 1 ou 2, dans lequel ledit premier corps (10) comprend une partie tubulaire (23) qui définit radialement ladite première chambre (14).

**4.** Système selon la revendication 3, dans lequel ledit deuxième corps (11) comprend une tige (25) qui se met en prise avec ladite partie tubulaire (23) et est couplée d'une manière étanche aux fluides à une surface interne de ladite partie tubulaire (23).

**5.** Système selon la revendication 4, dans lequel ladite tige (25) est axialement creuse et définit radialement ladite deuxième chambre (15) ; ledit premier élément piston (30) étant couplé d'une manière étanche aux fluides à une surface cylindrique interne (31) de ladite tige (25).

**6.** Système selon l'une quelconque des revendications précédentes, dans lequel ladite deuxième chambre (15) possède deux orifices (17, 18) séparés l'un de l'autre, pour un raccordement à ladite conduite d'alimentation pneumatique et pour l'évacuation d'huile éventuelle de ladite deuxième chambre (15).

**7.** Système selon l'une quelconque des revendications précédentes, dans lequel ladite conduite d'alimentation hydraulique (52) communique avec ladite troisième chambre (64) par l'intermédiaire d'un premier étranglement (69).

**8.** Système selon l'une quelconque des revendications précédentes, dans lequel une vanne (77) est interposée entre ladite quatrième chambre (65) et une source d'air sous pression (S) ; ladite vanne (77) étant normalement fermée et étant apte à être ouverte pour pressuriser ladite quatrième chambre (65) et ladite conduite d'alimentation pneumatique (57) jusqu'à une valeur de pression prédéfinie.

**9.** Système selon l'une quelconque des revendications précédentes, dans lequel ladite conduite d'alimentation pneumatique (57) communique avec les deuxièmes chambres (15) desdits vérins hydropneumatiques (1) par l'intermédiaire d'un deuxième étranglement (59) respectif.

**10.** Système selon l'une quelconque des revendications précédentes, dans lequel les deuxièmes chambres (15) desdits vérins hydropneumatiques (1) sont raccordées à un réservoir (19) par l'intermédiaire de vannes supplémentaires (20) respectives, qui peuvent être ouvertes pour évacuer de l'huile desdites deuxièmes chambres (15).

**11.** Système selon l'une quelconque des revendications précédentes, dans lequel ladite conduite d'alimentation hydraulique (52) communique avec les premières chambres (14) desdits vérins hydropneumatiques (1) par l'intermédiaire de vannes parachutes (55) respectives.

**12.** Véhicule comprenant :

- un système hydropneumatique (51) selon l'une quelconque des revendications précédentes, et
- une pluralité d'ensembles roue comprenant des suspensions (40) respectives, chacune ayant au moins l'un desdits vérins hydropneumatiques (1).

**13.** Véhicule selon la revendication 12, dans lequel chaque dit ensemble roue comprend au moins une roue (48), qui peut effectuer une rotation autour d'un axe de rotation (50), et dans lequel chaque dite suspension (40) comprend une structure de support (42) fixée à un châssis de véhicule et au moins un bras oscillant (44), ayant une première extrémité qui porte ladite roue (48), et une deuxième extrémité couplée à ladite structure de support (42) de façon à effectuer une rotation, conjointement avec ladite roue (48), autour d'un axe de pivotement (49) ; l'au moins un desdits vérins hydropneumatiques (1) étant agencé entre ladite roue (48) et ladite structure de support (42).

FIG.1

FIG.2

FIG.4

FIG.3

FIG.5

FIG.6

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3753763 A

- DE 102011115402 A1